# EUROPEAN PATENT SPECIFICATION

(11) **EP 2 789 812 B1**
(45) Date of publication and mention of the grant of the patent: **31.05.2017**
(21) Application number: 13162730.9
(22) Date of filing: 08.04.2013
(51) Int. Cl.: F01K 15/02, F01K 23/06, F02B 41/10

(54) **Turbo-compound system**
Turbocompound-System
Système turbo-combiné

(43) Date of publication of application: 15.10.2014
(60) Divisional application: 17156375.2
(73) Proprietor: FPT Motorenforschung AG, 9320 Arbon (CH)
(72) Inventor: Fessler, Harald, 9320 Arbon (CH)
(74) Representative: Franzolin, Luigi

(56) References cited:
- EP-A1- 1 916 397
- WO-A1-2012/053112
- WO-A1-2012/096958
- DE-A1-102009 028 467
- DE-A1-102010 047 518
- JP-A- S58 220 945
- US-A- 3 224 186

## Description

### Field of the invention

The present invention relates to a turbo-compound system, in particular in the field of large displacement engines.

### Description of the prior art

Turbo-compound schemes are well known. They exploit the energy of the exhaust gasses to drive a turbine which provides mechanical energy to the engine crankshaft. The turbine axle and the engine crankshaft are usually connected between each other through reduction gears and/or a clutch. The gears adapt the high rotation speed of the turbine to the low rotation speed of the crankshaft. The clutch usually permits to disconnect the turbine when its contribution is too low or negative and protect the turbine from torsional vibrations. Also an electrical connection to the crank shaft is possible (a generator driven by the turbine and motor driving the engine crankshaft).

A turbine, as well known, exploits the energy (enthalpy) content contained in the exhaust gasses for recovery, directly, mechanical energy. WO2012/053112 discloses all the feature of the preamble of claim 1, while WO2012/096958 discloses the implementation of a low pressure EGR scheme in a combustion engine scheme implementing a WHR system. US-3224186 discloses a turbo-compound system comprising a turbocharger unit and a second turbine fed by exhaust gasses of a combustion engine.

### Summary of the invention

The main object of the present invention is to recovery as much energy as possible from the exhaust gasses. This object is achieved by providing a turbo-compound system provided also of a Waste heat recovery (WHR) system, to convert the heat energy, usually rejected to the ambient air, into mechanical power by means of a expander (Ex) exploiting Rankine Cycle.

The main principle of the invention is disclosed in claim 1. Advantageously, while WHR system carrying out a Rankine cycle is mainly effective at lower loads of the combustion engine due to heat rejection limitations, the power turbine (turbo compound) increases the efficiency of the overall system mainly at higher loads (larger than ∼50%). Thus, the fuel consumption benefits can be extended to lower loads, starting from a turbo compound scheme. In general, the fuel consumption improves within the entire engine map.

These and further objects are achieved by means of an apparatus and method as described in the attached claims, which form an integral part of the present description.

### Brief description of the drawings

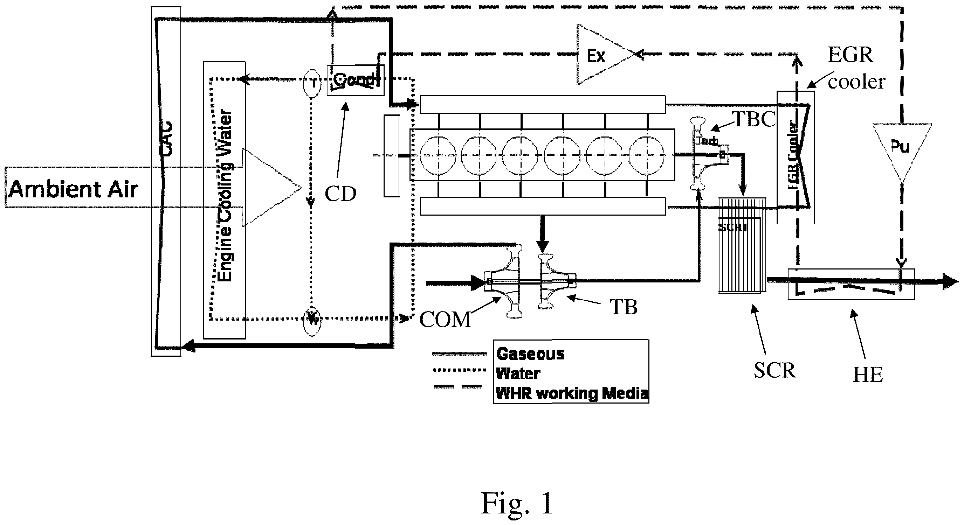

The invention will become fully clear from the following detailed description, given by way of a mere exemplifying and non limiting example, to be read with reference to the attached drawing figure 1, wherein a scheme for heat recovering of a combustion engine provided of turbo-compound is shown.

The same reference numerals and letters in the figures designate the same or functionally equivalent parts.

### Detailed description of the preferred embodiments

A preferred embodiment of the system for heat recovering, WHR, is shown on figure 1.

A turbine TBC is driven by the exhaust gasses and the mechanical energy produced is provided to the combustion engine in a known way, as described above.

The invention is particularly adapted but not limited to a combustion engine E provided with a turbo-supercharging unit, namely a turbine TB fed by the exhaust gases and a compressor COM driven by said turbine TB for compressing fresh air entering in the combustion engine E.

The engine E could be further provided with an intercooler CAC for refreshing the fresh air compressed by the compressor COM and/or with an EGR means with an EGR cooler for refreshing recirculated gasses.

The radiator ECW (Engine cooling water) rejects the heat contained in the engine coolant to the ambient air. The intercooler, if present, rejects the heat contained in the compressed air in the ambient.

The Rankine Cycle is operated through a different medium, hereinafter called WHR medium.

The coolest source of the Rankine cycle is the a condenser CD. It is a heat exchanger between the engine liquid and the WHR medium, connected on the coolant circuit, preferably, downstream with respect to the ECW, according to the water circulation direction.

The WHR medium condensed within the condenser CD is pumped by the pump PU to the heater HE, that exploits the heat contained in the exhaust gasses to evaporate it to expand within the Expander EX. The Expander can be any machine, per se known.

After the Expander, the WHR medium comes back to the condenser CD.

According to the invention the engine is turbo-supercharged and in particular the turbine TBC associated to the engine crankshaft is disposed downstream the turbo-supercharging unit, namely the turbine TB coupled with the compressor COM. Therefore, the exhaust gasses going out from the combustion engine cross the first turbine TB and then cross the turbine TBC. Hence the exhaust gasses cross a device, briefly called SCR, for reducing the pollutant emissions, such as an SCR and/or a DOC and/or an anti-particulate filter.

Along the ATS (After treatment system), downstream the SCR device, is disposed the heater HE for heating the WHR medium.

Also the EGR cooler is refreshed by the WHR medium, the latter receiving a further heat contribution for the heat recovery.

The expander can produce either mechanical, electrical, hydraulic energy to be supplied to the combustion engine and/or to the vehicle in general.

For example, the electrical energy produced can be exploited for feeding an electric motor coupled with the combustion engine or with one of the vehicle driving axles.

Also the pump can be driven by the combustion engine, or by the expander or by an electric motor.

The functions of said control unit could be integrated into a engine control unit.

The expander can be per se known.

According to a further preferred embodiment of the invention, which can be combined with the other ones, previously discussed, the combustion engine can be of the turbo-compound type.

It is well know, that a turbo compound turbine shows mainly benefits at higher loads. Even though the compound turbine extracts some energy the exhaust gas temperature are still high enough to drive a WHR system and get a combined benefit with corresponding reduction in fuel consumption. Actually the WHR system heat extraction is anyway limited by maximum vehicle cooling capacity. Hence the reduction of the exhaust gas energy due the TBC does not reduce the WHR efficiency at high loads. At low loads (<50%) the compound turbine is less effective and does hardly extract energy, which means the main gain in energy recovery comes from the WHR system. The combination of both technologies improves the fuel consumption in the entire operating range (engine map) without interfering between each other.

In order to permit the activation/deactivation of the WHR system, by-pass means can be provided in order to promote the bypass of the heater (HE) by the WHR medium and/or the bypass of the heater (HE) by the exhaust gasses. This especially when, at critical loads, the engine coolant reaches a threshold temperature.

A control unit can, therefore, manage the connection of the compound turbine TBC with the crankshaft and the activation/deactivation of the WHR system.

The control of the several architectural components described above can be implemented advantageously in a computer program comprising program code means for performing one or more steps of such method, when such program is run on a computer.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the scope of the invention as defined in the appended claims are deemed to be covered by this invention.

Further implementations, the several embodiments disclosed can be combined between each other, also with the discussed prior art. Further well known details are not discussed as the man skilled in the art is able to carry out the invention starting from the teaching of the above description.

## Claims

1. Turbo-compound system comprising a combustion engine (E) and
a turbo-supercharging unit (TB, COM) comprising a first turbine (TB) driving a compressor (COM) for compressing fresh air at the combustion engine intake,
a second turbine (TBC) fed by exhaust gasses of the combustion engine and having a shaft connected with an engine crankshaft for providing the latter with mechanical energy and comprising a heat recovery (WHR) system, coupled with said combustion engine (E), for carrying out a Rankine Cycle by exploiting the heat produced by the combustion engine for producing further mechanical energy, wherein said a first turbine (TB) is disposed upstream of said second turbine (TBC) along an after treatment system and **characterized in** comprising a device (SCR) for reducing the pollutant emissions arranged downstream of said second turbine (TBC) and upstream of a heater (HE) for heating a WHR medium and in comprising a EGR cooler refreshed by said WHR medium.

2. The system according to claim 1, wherein the mechanical energy produced by the heat recovery (WHR) system is provided to said engine crankshaft.

3. The system according to claim 1, wherein the mechanical energy produced by the heat recovery (WHR) system is provided to an electric generator.

4. The system according to any of the preceding claims, wherein the combustion engine (E) comprises an engine cooling water (ECW) of the liquid to ambient air type for cooling the engine coolant and wherein the condenser (CD) is a heat exchanger of the liquid to WHR medium type, series connected with said engine cooling water (ECW).

5. The system according to one of the preceding claims, further comprising an expander (EX) fed by the WHR medium heated, at least, by said heater (HE) and providing with mechanical energy
- said combustion engine (E) and/or
- an electric generator.

6. The system according to claim 5, wherein, when the expander (EX) provides with mechanical energy an electric generator, an electric motor is connected with the engine crankshaft, to provide the latter with said further mechanical energy, and fed with electric energy produced by said electric generator.

7. Terrestrial vehicle provided with a combustion engine (E) provided with a turbo-compound system for heat recovery (WHR) of the combustion engine (E) according to one of the preceding claims from 1 to 6.

## Patentansprüche

1. Turboverbundsystem, das eine Brennkraftmaschine (E) und eine Turboaufladungseinheit (TB, COM) umfasst, die eine erste Turbine (TB), die einen Verdichter (COM) zum Verdichten von Frischluft bei dem Brennkraftmaschineneinlass antreibt, eine zweite Turbine (TBC), die mit Abgas der Brennkraftmaschine versorgt wird und eine Welle besitzt, die mit einer Kraftmaschinenkurbelwelle verbunden ist, um für die Letztere mecharrische Energie bereitzustellen, und ein Wärmerückgewinnungssystem (WHR), das mit der Brennkraftmaschine (E) gekoppelt ist, um einen Rankine-Zyklus durch Ausnutzen der durch die Brennkraftmaschine erzeugten Wärme auszuftihren, um weitere mecharrische Energie zu erzeugen, umfasst, wobei die erste Turbine (TB) stromaufseitig der zweiten Turbine (TBC) längs eines Nachbehandlungssystems angeordnet ist,
**gekennzeichnet durch** eine Vorrichtung (SCR) zum Verringern der Schadstoffemissionen, die stromabseitig der zweiten Turbine (TBC) und stromaufseitig einer Heizeinrichtung (HE) zum Erwärmen eines WHR-Mediums angeordnet ist, und
eine AGR-Kühleinrichtung, die durch das WHR-Medium gekühlt wird.

2. System mach Anspruch 1, wobei die mechanische Energie, die durch das Wärmerückgewinnungssystem (WHR-System) erzeugt wird, für die Kraftmaschinenkurbelwelle bereitgestellt wird.

3. System nach Anspruch 1, wobei die mechanische Energie, die durch das Wärmerückgewinnungssystem (WHR-System) erzeugt wird, für einen elektrischen Generator bereitgestellt wird.

4. System nach einem der vorhergehenden Ansprüche, wobei die Brennkraftmaschine (E) Kraftmaschinenkühlwasser (ECW) des Flüssigkeits/Llmgebungsluft-Typs umfasst, um das Kraftmaschinenkühlmittel zu kühlen, und wobei der Kondensator (CD) ein Wärmetauscher des Flüssigkeits/WHR-Medium Typs ist, der mit dem Kraftmaschinenkühlwasser (ECW) in Reihe geschaltet ist.

5. System nach einem der vorhergehenden Ansprüche, das ferner einen Expandierer (EX) umfasst, der mit dem erhitzten WHR-Medium wenigstens durch die Heizeinrichtung (HE) versorgt wird und mechanische Energie für
- die Brennkraftmaschine (E) und/oder
- einen elektrischen Generator bereitstellt.

6. System nach Anspruch 5, wobei dann, wenn der Expandierer (EX) mechanische Energie für einen elektrischen Generator bereitstellt, ein Elektromotor mit der Kraftmaschinenkurbelwelle verbunden ist, um für die Letztere die weitere mechanische Energie bereitzustellen, und mit elektrischer Energie versorgt wird, die durch den elektrischen Generator erzeugt wird.

7. Bodenfahrzeug, das mit einer Brennkraftmaschine (E) versehen ist, die mit einem Turboverbundsystem zur Wärmerückgewinnung (WHR) der Brennkraftmaschine (E) nach einem der vorhergehenden Ansprüche 1 bis 6 versehen ist.

## Revendications

1. Système turbo-combiné comprenant un moteur à combustion (E) et
une unité de turbo-suralimentation (TB, COM) comprenant une première turbine (TB) entraînant un compresseur (COM) pour comprimer de l'air frais au niveau de l'admission du moteur à combustion,
une seconde turbine (TBC) alimentée par les gaz d'échappement du moteur à combustion et ayant un arbre connecté à un vilebrequin de moteur afin de fournir à ce dernier une énergie mécanique et comprenant un système de récupération de la chaleur (WHR), couplé au dit moteur à combustion (E) pour exécuter un cycle de Rankine en exploitant la chaleur produite par le moteur à combustion en vue de produire plus d'énergie mécanique, ladite première turbine (TB) étant agencée en amont de ladite seconde turbine (TBC) le long d'un système de post-traitement
et **caractérisé en ce qu'**il comprend un dispositif (SCR) pour réduire les émissions d'agents polluants, agencé en aval de ladite seconde turbine (TBC) et en amont d'un dispositif de chauffage (HE) pour chauffer un agent WHR et **en ce qu'**il comprend un refroidisseur EGR refroidi par ledit agent WHR.

2. Système selon la revendication 1, dans lequel l'énergie mécanique produite par le système de récupération de chaleur (WHR) est fournie au dit vilebrequin de moteur.

3. Système selon la revendication 1, dans lequel l'énergie mécanique produite par le système de récupération de chaleur (WHR) est fournie à un générateur électrique.

4. Système selon l'une quelconque des revendications précédentes, dans lequel le moteur à combustion (E) comprend un radiateur refroidi par eau (ECW) du type à échange entre liquide et air ambiant pour refroidir le liquide de refroidissement du moteur et dans lequel le condensateur (CD) est un échangeur de chaleur du type entre liquide et l'agent WHR, connecté en série au dit radiateur refroidi par eau (ECW).

5. Système selon l'une quelconque des revendications précédentes, comprenant en outre un dispositif d'expansion (EX) alimenté par l'agent WHR chauffé, au moins, par ledit dispositif de chauffage (HE) et fournissant une énergie mécanique
- au dit moteur de combustion (E) et/ou
- à un générateur électrique.

6. Système selon la revendication 5, dans lequel, quand le dispositif d'expansion (EX) fournit une énergie mécanique à un générateur électrique, un moteur électrique est connecté au vilebrequin de moteur, pour fournir à ce dernier ladite énergie mécanique supplémentaire, et alimenté en énergie électrique produite par ledit générateur électrique.

7. Véhicule terrestre équipé d'un moteur à combustion (E) équipé d'un système turbo-combiné pour une récupération de la chaleur (WHR) du moteur à combustion (E) selon l'une quelconque des revendications précédentes 1 à 6.
